# EUROPÄISCHE PATENTANMELDUNG

(11) **EP 2 538 457 A2**
(43) Veröffentlichungstag der Anmeldung: **26.12.2012**
(21) Anmeldenummer: 12172344.9
(22) Anmeldetag: 18.06.2012
(51) Int. Cl.: H01L 31/058

(54) **Photovoltaik-Thermie-Kollektor**

(30) Priorität: 20.06.2011 DE 102011105309
(71) Anmelder: Eurosun Solartechnik UG, 15517 Fürstenwalde (DE)
(72) Erfinder: Kalberlah, Dr. Klaus, 14947 Nuthe-Urstromtal (DE); Frost, Andreas, 16341 Panketal (DE)
(74) Vertreter: Gulde Hengelhaupt Ziebig & Schneider

(57) **Zusammenfassung**

Die Erfindung betrifft einen Photovoltaik-Thermie-Kollektor (PVT-Kollektor) (10), der einen Plattenwärmetauscher (20) und ein Photovoltaik-Laminat (PV-Laminat) (50) umfasst. Der Plattenwärmetauscher weist zwei Blechplatten (22, 24) auf, die eine Oberseite und Unterseite des Plattenwärmeaustauschers bilden. Das PV-Laminat umfasst eine Vielzahl von Solarzellen (54) und eine das PV-Laminat nach außen abschließende Deckschicht (52) aus einem Kunststoff. Der PVT-Kollektor zeichnet sich dadurch aus, dass die Solarzellen direkt auf der die Oberseite des Plattenwärmetauschers bildenden Blechplatte angeordnet sind. Der PVT-Kollektor weist insbesondere die Form eines Dachziegels oder einer Dachschindel auf.

## Beschreibung

Die Erfindung betrifft einen Photovoltaik-Thermie-Kollektor (PVT- Kollektor), insbesondere in der Form eines Dachziegels oder einer Dachschindel.

### Hintergrund der Erfindung und Stand der Technik

Die Solarstromtechnik (Photovoltaik, PV) hat seit der Einführung des EEG (Energie-Einspeise-Gesetzes) einen nahezu beispielslosen Siegeszug angetreten. Dennoch bleibt zu bedenken, dass etwa 85% des Energiebedarfs eines durchschnittlichen Haushalts in Form von Wärme benötigt wird. In Mitteleuropa handelt es sich dabei im Wesentlichen um Heizenergie, die in den Übergangs- und Wintermonaten des Jahres benötigt wird; ein kleinerer Teil der benötigten Wärme dient der Erzeugung von warmem Brauchwasser zum Duschen, Baden und Waschen sowie zur Einspeisung in Wasch- und Spülmaschinen. Solarthermische Anlagen zur Versorgung der Haushalte mit warmem Wasser sind zwar allgemein bekannt und wurden in den vergangenen Jahren in erheblichem Umfang installiert, sie decken jedoch den Brauchwasser-Bedarf nur in den Sommermonaten und somit im Jahresmittel nur zu 60 - 70% ab und leisten bei der Gebäudeheizung im Winter so gut wie keinen Beitrag. Konventionelle Solarthermieanlagen mit Flach- oder Röhrenkollektoren ernten somit, bezogen auf den gesamten Wärmebedarf eines Haushalts, im Jahresmittel bestenfalls 15%.

Um diese Situation zu verbessern, wurden PV-Module und Warmwasser-Kollektoren zu sogenannten PVT-Kollektoren (PVT = Photovoltaik-Thermie) vereinigt, wobei zumindest eine bessere Ausnutzung der Dachfläche erreicht wird. Erstrebenswert wären PVT-Kollektoren, die in Kombination mit einer Wärmepumpe eine über 90%ige Deckung des Gesamtenergiebedarfs aus solarer Energie erreichen können.

Es sind konventionelle Flachkollektor-Kästen mit Glasabdeckung, bei denen die PV-Zellen bereichsweise innenseitig auf die Glasscheibe geklebt sind, bekannt. Der Betrieb erfolgt in der Regel ohne Wärmepumpe. Dieses Hybridkonzept ist nicht zielführend, weil das Grundproblem (Erträge in den Wintermonaten) ungelöst bleibt. Zudem wird, wegen zu hoher Zellen-Temperaturen, im PV-Bereich nicht optimal geerntet. Weil sich PV und Thermie die Apertur (bestrahlte Fläche) teilen müssen, erreichen beide Technologien keine hohe Effizienz. Im Sommer sind die integrierten PV-Kollektoren wegen hoher Stillstandstemperaturen gefährdet und das System ist gegen Abkochen zu schützen.

### Beschreibung der Erfindung

Die Erfindung geht aus von einem Photovoltaik-Thermie-Kollektor (PVT-Kollektor), der einen Plattenwärmetauscher und ein Photovoltaik-Laminat (PV-Laminat) umfasst, hervor. Der Plattenwärmetauscher weist zwei Blechplatten auf, die eine Oberseite und Unterseite des Plattenwärmeaustauschers bilden. Das PV-Laminat umfasst eine Vielzahl von Solarzellen und eine das PV-Laminat nach außen abschließende Deckschicht aus einem Kunststoff (kein Glas) auf. Der PVT-Kollektor zeichnet sich dadurch aus, dass die Solarzellen direkt auf der die Oberseite des Plattenwärmetauschers bildenden Blechplatte angeordnet sind. Die Solarzellen sind vorzugsweise mit einem (polymeren) Kleber auf der Blechplatte fixiert. Der PVT-Kollektor weist insbesondere die Form eines Dachziegels oder einer Dachschindel auf.

Der grundlegende Erfindungsgedanke ist, dass der Plattenwärmetauscher und das glaslose PV-Laminat zu einem Bauteil zusammengefasst sind. Durch diese erfindungsgemäße Integration entfällt zunächst einmal die bei PV-Laminaten übliche Rückseiten-Verbundfolie, da die Zellen direkt auf die (glatte) Vorderseite des Plattenwärmetauschers auflaminiert werden. Anders ausgedrückt, das PV-Laminat enthält als Rückseite die Blechplatte, welche zugleich die Vorderseite des Wärmetauschers (und damit auch die Oberseite der Dacheindeckung) bildet. Somit entfällt auch die aufwändige, wärmeleitende Verklebung eines konventionellen PV-Laminates mit einem Plattenwärmetauscher, was nicht nur Herstellungskosten spart, sondern zusätzlich den Wärmeeintrag von den Solarzellen in die Wärmeträger-Flüssigkeit verbessert.

Weiterhin wird der Plattenwärmetauscher nicht auf eine Dacheindeckung montiert oder geklebt (gleichgültig, ob mit oder ohne Dachabstand), sondern er selbst ist die Dacheindeckung. Die Eignung als Dacheindeckung kann durch 3 Maßnahmen unterstützt werden:
1) der Plattenwärmetauscher erhält die äußere Form eines Dachziegels bzw. einer überlappender Dachschindel, sodass mit einer Vielzahl derartiger PVT-Dachziegeln eine komplette Dacheindeckung hergestellt wird
2) die Rückseite des Plattenwärmetauschers wird mit einer Struktur, insbesondere einer Wabenstruktur versehen. Die Tragfähigkeit beträgt dadurch das 3 - 5 fache einer unverformten Blechplatte gleicher Dicke.
3) die Rück- und Vorderseite des Plattenwärmetauschers wird nicht nur entlang der Ränder flüssigkeitsdicht miteinander verbunden, sondern an mehreren Stellen in Mitten der Kollektorfläche miteinander verklebt, verschweißt (vorzugsweise durch Punktschweißen) oder verlötet. Hierdurch und durch die unter 2) genannte Maßnahme entsteht ein als Dachziegel geeigneter Hohlkörper mit hoher Steifigkeit bzw. Belastbarkeit und geringem Gewicht, der wasserdurchflossen sein kann, aber nicht sein muss.

Die hohe Steifigkeit des PVT-Dachziegels erlaubt nicht nur eine Begehbarkeit des Daches, sondern verstärkt auch die Hagelsicherheit bei der Verwendung von kristallinen Siliziumzellen. Es hat sich nämlich gezeigt, dass ein harter Untergrund für das PV-Laminat im Hageltest vorteilhaft ist. Der Plattenwärmeaustauscher weist insbesondere eine sich zwischen den beiden Blechplatten ergebende Leitstruktur für ein flüssiges Wärmemedium auf. Die Leitstruktur ergibt sich insbesondere aus einer wabenförmigen Prägung der die Unterseite des Plattenwärmeaustauschers bildenden Blechplatte.

Es gibt 4 Funktionen, die zusätzlich von dem PVT-Dachziegel erfüllt werden können:
(1) Elektrische Verbindung zu den benachbarten PVT-Kollektoren (Reihenschaltung)
(2) Hydraulische Verbindung zu den benachbarten PVT-Kollektoren (mit einem für Wärmepumpenbetrieb ausreichenden Querschnitt)
(3) Öffnungen zur Hinterlüftung
(4) Befestigung des Dachziegels an der Lattung der Dachkonstruktion, unter Berücksichtigung der bauüblichen Toleranzen

Vorzugsweise sind die Stirnseiten des Plattenwärmeaustauschers Formteile aus Kunststoff, wodurch die rückseitige strukturierte Blechplatte des Plattenwärmetauschers nicht wannenförmig verformt, sondern lediglich rinnenförmig entlang den Längsseiten abgekantet ist. Die Stirnseiten des Plattenwärmeaustauschers können ferner Steckverbindungselemente zur mechanischen, elektrischen und/oder hydraulischen Verbindung mit benachbarten Photovoltaik-Thermie-Kollektoren sowie Öffnungen zur Hinterlüftung oder Vorkehrungen zur Befestigung des solaren Dachziegels an den Dachlatten enthalten. Die Stirnseiten der Plattenwärmetauscher können einen von der Außentemperatur gesteuerten Mechanismus enthalten, um bei Frosttemperaturen die Öffnungen zur Hinterlüftung zu verschließen. Übliche PVT-Kollektoren besitzen mindestens eine elektrische Anschlussdose aus Kunststoff mit zwei Kabelenden, die mit Steckverbindungen ausgestattet sind. Es ist hinsichtlich der Herstellungskosten kein wesentlicher Mehraufwand, an Stelle der Anschlussdosen die Stirnseiten des PVT-Kollektors aus Kunststoff zu fertigen und als mechanisches, elektrisches und hydraulisches Verbindungssystem zum benachbarten PVT-Kollektor auszubilden. Montagearbeit und -material für die Installation des PVT-Kollektors entfallen somit fast vollständig; die Dacheindeckung mit PVT-Dachziegeln gleicht weitgehend der Eindeckung mit normalen Dachziegeln.

Der erfindungsgemäße PVT-Kollektor weist insbesondere frontseitig statt einer Folien- oder einer Silikatglas-Abdeckung eine (vorzugsweise durch Extrusion Coating aufgebrachte) 2 - 3 mm dicke Kunststoffschicht als Deckschicht auf. Auf diese Weise werden zwar nicht die bei konventionellen Flach- oder Röhrenkollektoren üblichen, hohen Wassertemperaturen erreicht, jedoch noch hinreichend hohe Wärmegrade. Neben der besseren Isolierwirkung sind das geringere Gewicht und die Bruchfestigkeit Vorteile. Durch die verbesserte Wärmeisolation wird während der Sommermonate eine ausreichende Brauchwasser-Erwärmung auch ohne Wärmepumpe erreicht, während bei Glas- oder Folienabdeckung des PVT-Kollektors sehr viel häufiger ein Wärmepumpenbetrieb erforderlich ist.

Da Wärmepumpen primärseitig auf große Wassermengen (beispielsweise auf 2m³/h bei 8-12 kW Leistung) ausgelegt sind, erweisen sich die üblichen Flach- und Röhrenkollektoren (typische Durchflussmengen bei 100l/h) als grundsätzlich ungeeignet für den Betrieb an Wärmepumpen. Hingegen hat der rückseitige Plattenwärmetauscher des erfindungsgemäßen PVT-Kollektors einen ausreichend großen lichten Querschnitt für die zum Wärmepumpenbetrieb erforderlichen Durchflussmengen (niederer Temperatur), kann jedoch im Sommer zur Brauchwassererwärmung ohne Wärmepumpe auch im "low flow" Verfahren betrieben werden, wobei dann das Erreichen einer ausreichenden Wassertemperatur durch die vorstehend beschriebene Kunststoff-Isolierung unterstützt wird. Die Stillstandstemperatur des glaslosen PVT-Kollektors überschreitet dennoch nicht die für PVT-Kollektoren vorgeschriebene Maximaltemperatur von 85°C.

Statt aus der Umluft bezieht der rückseitige Plattenwärmetauscher in den Wintermonaten seine Wärme aus der Innentemperatur des Hauses (Hinterlüftung aus dem Gebäudeinneren). Die Dachisolierung kann geringer dimensioniert sein, da der Abfluss von Wärmeenergie durch das Dach aus PVT-Dachziegeln quasi aufgefangen und zurück transportiert wird.

Das glaslose PV-Laminat zur vorderseitigen Abdeckung des Plattenwärmetauschers gegebenenfalls durch Extrusion herzustellen, hat einen weiteren, zunächst nicht offensichtlichen Vorteil: während bei einer Lamination der Solarzellen im konventionellen Flachbett-Laminator die Rückseite des Laminats aus Gründen des Wärmeeintrags ein unverformt-flaches Blech sein muss und keinesfalls ein Hohlkörper sein darf, kann die Extrusion auf dem fertigen Plattenwärmetauscher erfolgen. Dies gestattet, Vorder- und Rückseite des Plattenwärmetauschers bereits vor der Lamination der Solarzellen durch Löt- oder Schweißverfahren zu verbinden, während nach der Zellen-Lamination wegen der Temperaturempfindlichkeit der Zellen bzw. der Überdeckung der zu verlötenden Fläche nur (aufwändige) Klebeverfahren möglich sind.

### Ausführungsbeispiel

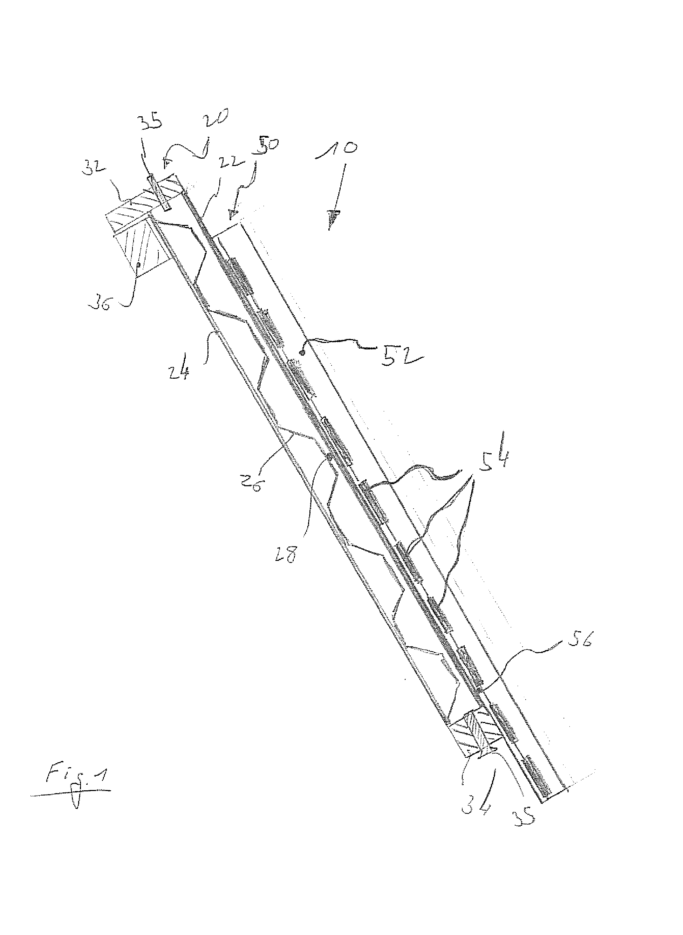

Fig. 1 zeigt einen schematischen Längsschnitt durch einen erfindungsgemäßen PVT-Kollektor 10, der als Dachziegel ausgebildet ist. Der PVT-Kollektor 10 umfasst einen Plattenwärmetauscher 20 und ein Photovoltaik-Laminat 50.

Der Plattenwärmetauscher 20 weist zwei Blechplatten 22 und 24 auf, zwischen denen sich eine Leitstruktur für ein flüssiges Wärmemedium, in der Regel Wasser, ergibt. Die Leitstruktur besteht hier aus einer wabenförmigen Prägung 26 der rückseitigen Blechplatte 24 und wird beispielsweise durch Punktschweißen am Kontaktpunkt 28 mit der die Oberseite des Plattenwärmetauschers 20 bildenden Blechplatte 22 verbunden.

Auf beiden Stirnseiten des Plattenwärmetauschers 20 sind Formteile 32, 34 aus Kunststoff vorhanden. Über die Formteile 32, 34 erfolgt die elektrische und hydraulische Verbindung der einzelnen Dachziegel mit einem Steckverbindungselement 35 beziehungsweise kann mit geeigneten Lüftungsöffnungen und Vorkehrungen eine Hinterlüftung erfolgen. Das Formteil 32 liegt im verbauten Zustand auf einer Dachlatte 36 auf, wodurch der PVT-Kollektor 10 auf dem Dach in Position gehalten wird.

Direkt oberhalb der Blechplatte 22 schließt sich das PV-Laminat 50 an. Das PV-Laminat 50 beinhaltet eine 2-3 mm dicke Deckschicht 52 aus organischem Glas (Kunststoff, z. B. Methacrylat). Die Solarzellen 54 werden direkt auf der Blechplatte 22 mit Hilfe eines Klebers 56 aufgebracht. Es ist also keine weitere tragende Verstärkungsplatte oder Verstärkungsschicht für das PV-Laminat 50 erforderlich, wie es bei den PV-Laminaten des Standes der Technik immer der Fall ist.

## Patentansprüche

1. Photovoltaik-Thermie-Kollektor (10) umfassend:
einen Plattenwärmetauscher (20) mit zwei Blechplatten (22, 24), die eine Oberseite und Unterseite des Plattenwärmetauschers (20) bilden, und
ein Photovoltaik-Laminat (50) mit einer Vielzahl von Solarzellen (54) und einer das Photovoltaik-Laminat (50) nach außen abschließenden Deckschicht (52) aus einem Kunststoff,
**dadurch gekennzeichnet, dass**
die Solarzellen (54) direkt auf der die Oberseite des Plattenwärmetauschers (20) bildenden Blechplatte (22) angeordnet sind.

2. Photovoltaik-Thermie-Kollektor nach Anspruch 1, **dadurch gekennzeichnet, dass** der Photovoltaik-Thermie-Kollektor (10) die Form eines Dachziegels oder einer Dachschindel aufweist.

3. Photovoltaik-Thermie-Kollektor nach Anspruch 1, **dadurch gekennzeichnet, dass** die Stirnseiten des Plattenwärmetauschers (20) Formteile (32, 34) aus Kunststoff sind.

4. Photovoltaik-Thermie-Kollektor nach Anspruch 3, **dadurch gekennzeichnet, dass** die Formteile (32, 34) elektrische und/oder hydraulische Steckverbindungselemente (35) zur Verbindung mit benachbarten Photovoltaik-Thermie-Kollektoren (10) aufweisen.

5. Photovoltaik-Thermie-Kollektor nach Anspruch 1, **dadurch gekennzeichnet, dass** die Solarzellen (54) mit einem Kleber (56) auf der Blechplatte (22) fixiert sind.

6. Photovoltaik-Thermie-Kollektor nach Anspruch 1, **dadurch gekennzeichnet, dass** der Plattenwärmeaustauscher (20) eine sich zwischen den beiden Blechplatten (22, 24) ergebende Leitstruktur für ein flüssiges Wärmemedium aufweist.

7. Photovoltaik-Thermie-Kollektor nach Anspruch 6, **dadurch gekennzeichnet, dass** sich die Leitstruktur aus einer wabenförmigen Prägung (26) der die Unterseite des Plattenwärmeaustauschers (34) bildenden Blechplatte (24) ergibt.
